**Europäisches Patentamt**

**European Patent Office**

**Office européen des brevets**

(19)

(11) Numéro de publication : **0 341 582 B1**

(12) # FASCICULE DE BREVET EUROPEEN

(45) Date de publication du fascicule du brevet :
**06.11.91 Bulletin 91/45**

(51) Int. Cl.⁵ : **G04C 3/14, H02P 8/00**

(21) Numéro de dépôt : **89108094.7**

(22) Date de dépôt : **05.05.89**

(54) **Procédé de commande d'un moteur pas à pas à deux sens de rotation et moteur pas à pas à deux sens de rotation destiné à être commandé selon ce procédé.**

(30) Priorité : **11.05.88 CH 1809/88**

(43) Date de publication de la demande :
**15.11.89 Bulletin 89/46**

(45) Mention de la délivrance du brevet :
**06.11.91 Bulletin 91/45**

(84) Etats contractants désignés :
**DE FR GB**

(56) Documents cités :
**EP-A- 0 057 663**
**EP-A- 0 092 522**
**DE-A- 2 611 319**

(56) Documents cités :
**US-A- 4 144 467**
**US-A- 4 371 821**
**US-A- 4 514 676**
**US-A- 4 546 278**

(73) Titulaire : **ASULAB S.A.**
**Faubourg du Lac 6**
**CH-2501 Bienne (CH)**

(72) Inventeur : **Taghezout, Daho**
**Stettemerstrasse 143**
**CH-8207 Schaffhouse (CH)**

(74) Mandataire : **de Montmollin, Henri et al**
**ICB Ingénieurs Conseils en Brevets SA**
**Passage Max Meuron 6**
**CH-2001 Neuchâtel (CH)**

EP 0 341 582 B1

Jouve, 18, rue Saint-Denis, 75001 PARIS

## Description

La présente invention concerne un procédé de commande d'un moteur pas à pas à deux sens de rotation comportant :

— un rotor comprenant un aimant permanent produisant un premier champ magnétique ;

— une première bobine traversée par une première partie dudit premier champ magnétique et destinée à produire un deuxième champ magnétique en réponse à un premier courant ;

— une deuxième bobine traversée par une deuxième partie dudit premier champ magnétique et destinée à produire un troisième champ magnétique en réponse à un deuxième courant, lesdites première et deuxième parties du premier champ magnétique formant dans ledit aimant permanent un premier champ résultant ; et

— des moyens de positionnement destinés à maintenir ou à ramener ledit rotor dans l'une ou l'autre d'une pluralité de positions de repos ;
ledit procédé comportant la production desdits courants et leur application simultanée auxdites bobines chaque fois que ledit rotor doit tourner d'un pas.

La présente invention concerne également un moteur pas à pas à deux sens de rotation comportant:

— un rotor comprenant un aimant permanent produisant un premier champ magnétique ;

— une première bobine traversée par une première partie dudit premier champ magnétique et destinée à produire un deuxième champ magnétique ;

— une deuxième bobine traversée par une deuxième partie dudit premier champ magnétique et destinée à produire un troisième champ magnétique ;

— des premiers moyens pour appliquer ledit deuxième champ magnétique audit aimant permanent dans une première direction ;

— des deuxièmes moyens pour appliquer ledit troisième champ magnétique audit aimant permanent dans une deuxième direction symétrique de ladite première direction par rapport à un axe de symétrie ; et

— des moyens de positionnement destinés à maintenir ou à ramener ledit rotor dans l'une ou l'autre d'une pluralité de positions de repos.

Des moteurs pas à pas qui répondent à la définition générale donnée ci-dessus sont utilisés, par exemple, dans des pièces d'horlogerie électroniques pour entraîner les organes d'affichage de celles-ci qui sont généralement constitués par des aiguilles.

Le brevet US-A-4371821 décrit un tel moteur pas à pas, qui comprend dans cet exemple un stator comportant trois faces polaires délimitant entre elles un espace sensiblement cylindrique dans lequel est situé l'aimant permanent du rotor dont l'axe de rotation est sensiblement confondu avec l'axe de cet espace cylindrique.

L'aimant permanent du rotor comporte un axe d'aimantation coupant l'axe de rotation sous un angle de 90° environ.

Chaque face polaire occupe un arc de cercle de 120° environ dans une vue en plan du moteur, et elle est située à une première extrémité d'une pièce polaire.

Chacune de ces premières extrémités des pièces polaires est reliée à la première extrémité des deux autres pièces polaires par des zones à grande réluctance situées de part et d'autre de la face polaire correspondante.

Les deuxièmes extrémités de la première et de la deuxième pièce polaire sont reliées par un premier noyau sur lequel est enroulée une première bobine, et les deuxièmes extrémités de la première et de la troisième pièce polaire sont également reliées par un deuxième noyau sur lequel est enroulée une deuxième bobine.

Enfin, le stator du moteur comporte des moyens pour créer un couple de positionnement du rotor qui tend à maintenir ou à ramener ce dernier dans l'une ou l'autre de deux positions de repos. Ces positions de repos sont celles dans lesquelles l'axe d'aimantation de l'aimant permanent a une direction dite direction de repos qui est celle d'une droite coupant l'axe de rotation du rotor sous un angle de 90° environ et passant pas le milieu de la première face polaire. Cette droite est donc l'axe de symétrie de la première face polaire, ainsi que l'axe de symétrie des deuxième et troisième faces polaires l'une par rapport à l'autre.

Les champs magnétiques produits par les bobines lorsqu 'elles sont parcourues par un courant ont donc, dans l'espace cylindrique délimité par les faces polaires, des directions symétriques l'une de l'autre par rapport à cet axe de symétrie.

Dans une autre forme d'exécution décrite dans le brevet US-A-4371821 mentionné ci-dessus, le stator du moteur ne comporte pas de pièce polaire et les deux bobines, sans noyau, ont la forme de cadres sensiblement plats entourant partiellement l'aimant du rotor.

Les plans de ces bobines forment un angle dont un plan bissecteur contient l'axe de rotation du rotor.

Les directions des champs magnétiques produits par ces bobines sont donc symétriques par rapport à un axe de symétrie contenu dans ce plan bissecteur et perpendiculaire à l'axe de rotation du rotor.

Dans cette forme d'exécution également, le moteur comporte des moyens pour créer un couple de positionnement du rotor qui tend à maintenir ou à ramener ce dernier dans l'une ou l'autre de deux positions angulaires de repos qui sont à nouveau celles dans lesquelles l'axe d'aimantation de l'aimant permanent du rotor a une direction de repos qui est celle de l'axe de symétrie mentionné ci-dessus.

Le brevet US-A-4371821 déjà mentionné décrit également un procédé de commande du moteur décrit ci-dessus.

Ce procédé consiste à appliquer aux bobines des impulsions motrices formées de deux parties. Pendant la première partie de chaque impulsion motrice, les bobines sont alimentées par des tensions égales en valeur absolue dont la polarité est telle que le champ magnétique appliqué à l'aimant du rotor et qui résulte de l'addition des champs magnétiques produits par ces bobines a une direction perpendiculaire à la direction de repos définie ci-dessus et un sens tel que le rotor commence à tourner dans le sens voulu. A la fin de la première partie de chaque impulsion motrice, la polarité de la tension appliquée à l'une des bobines est inversée, de manière que le champ magnétique résultant prenne une direction parallèle à la direction de repos et un sens opposé au sens qu'avait l'axe d'aimantation de l'aimant du rotor avant le début de l'impulsion motrice.

Chacune de ces deux parties de l'impulsion motrice dure quelques millisecondes.

Ce moteur présente l'avantage de fournir, toutes autres choses étant égales, un couple identique dans ses deux sens de rotation.

Cependant, pour que le moteur fonctionne correctement et avec son rendement maximum, il faudrait que la deuxième partie de l'impulsion motrice commence lorsque le rotor a tourné de 90° exactement.

Ceci n'est pratiquement jamais le cas, car l'angle parcouru par le rotor pendant la première partie de l'impulsion motrice dépend du couple résistant qui lui est appliqué.

Or, lorsque les bobines du moteur sont alimentées comme elles le sont dans la première partie de l'impulsion motrice, le couple moteur a sa valeur maximale lorsque le rotor occupe une des positions de repos et diminue rapidement lorsque ce rotor commence à tourner. En outre, lorsque ses bobines sont alimentées comme elles le sont dans la deuxième partie de l'impulsion motrice, le couple moteur est nul lorsque le rotor occupe une des positions de repos et augmente assez lentement en fonction de l'angle de rotation de ce rotor.

Au début de la deuxième partie de l'impulsion motrice, le couple fourni par le moteur a donc une valeur qui n'est qu'une fraction du couple maximum qu'il peut fournir, et cette fraction est d'autant plus faible que le couple résistant appliqué au rotor est grand.

Il en résulte que le rendement du moteur est assez faible et que, pour entraîner une charge mécanique donnée, il consomme plus d'énergie électrique qu'un moteur pas à pas classique à un seul sens de rotation.

D'autre part, si le couple résistant appliqué au rotor est faible, ce rotor atteint la position où il a tourné de 90° avant que la première partie de l'impulsion motrice soit terminée.

L'énergie électrique fournie au moteur pendant la fin de cette première partie de l'impulsion motrice est dissipée en pure perte, ce qui diminue encore le rendement de ce moteur.

En outre, après avoir atteint la position mentionnée ci-dessus, le rotor oscille autour de celle-ci jusqu'à la fin de la première partie de l'impulsion motrice. Il y a donc un risque non négligeable que la deuxième partie de l'impulsion motrice provoque une rotation du rotor dans la direction opposée à la direction voulue au lieu de lui faire terminer correctement son pas.

Le fonctionnement correct du moteur n'est donc pas absolument garanti.

De plus, le fait qu'il est nécessaire d'inverser le sens du courant dans l'une des bobines au cours de chaque impulsion motrice rend difficile l'adjonction au circuit de commande du moteur décrit ci-dessus d'un des circuits bien connus qui sont destinés à diminuer la consommation d'un moteur pas à pas en ajustant la durée des impulsions motrices qui lui sont fournies à la charge mécanique qu'il entraîne.

Le brevet US-A-4514676 propose un procédé de commande du moteur décrit ci-dessus qui évite en partie ces inconvénients.

Selon ce procédé, une des bobines est alimentée, seule, pour faire tourner le rotor dans un sens, et l'autre bobine est alimentée, également seule, pour faire tourner le rotor dans l'autre sens.

Pour chacune des positions de repos du rotor, la polarité de la tension appliquée à la bobine correspondant au sens de rotation désiré est choisie de manière que le champ magnétique appliqué à l'aimant du rotor fasse, lorsque ce rotor occupe cette position de repos, un angle de 120° environ avec la direction de repos du rotor.

Lorsque ce moteur est commandé selon ce procédé, le couple qu'il fournit commence par augmenter, passe pas un maximum lorsque le rotor a tourné de 30° environ et diminue ensuite.

Cette variation du couple moteur en fonction de l'angle de rotation du rotor est plus favorable que dans le cas où le moteur est commandé de la manière décrite dans le brevet US-A-4371821 mentionné ci-dessus. En outre, la plupart des inconvénients mentionnés ci-dessus sont évités.

Cependant, du fait qu'une seule bobine est alimentée, les pertes par effet Joule dans cette bobine sont plus élevées, toutes autres choses étant égales, que celles qui se produisent lorsque le moteur est commandé de la manière décrite dans le brevet US-A-4371821. Le rendement du moteur n'est donc pas sensiblement amélioré par ce deuxième procédé de commande.

Le brevet US-A-4546278 décrit également un moteur répondant à la définition ci-dessus. Ce moteur et son procédé de commande ne seront pas décrits à nouveau ici, sinon pour relever que ce procédé présente à peu près les mêmes inconvénients que celui qui est décrit dans le brevet US-A-4371821.

Un but de la présente invention est de proposer un procédé de commande d'un moteur pas à pas répondant à la définition générale donnée ci-dessus grâce auquel le couple fourni par le moteur a une variation favorable en fonction de l'angle de rotation du rotor, le rendement du moteur est nettement amélioré, ainsi que sa sécurité de fonctionnement.

Ce but est atteint par le procédé revendiqué, qui est caractérisé par le fait que les courants appliqués aux bobines sont produits avec le même sens pendant toute la durée de chaque impulsion motrice et avec des intensités telles que, au début de cette application et lorsque le rotor occupe l'une de ses positions de repos, le premier champ résultant défini ci-dessus forme un angle ayant une valeur comprise entre 110° environ et 160° environ avec un deuxième champ résultant qui est le champ magnétique résultant de l'addition vectorielle des champs magnétiques produits dans l'aimant permanent par le passage de ces courants dans ces bobines, les sens de ces courants étant en outre tels que cet angle a un sens, lorsqu'il est mesuré depuis le premier champ résultant vers le deuxième champ résultant, qui est le sens dans lequel le rotor doit tourner.

Un autre but de la présente invention est de proposer un moteur pas à pas qui se prête particulièrement bien à être commandé selon le procédé ci-dessus.

Cet autre but est atteint par le moteur revendiqué, qui est caractérisé par le fait que ses moyens de positionnement sont agencés de manière que, dans chacune des positions de repos de son rotor, le champ magnétique résultant formé dans l'aimant permanent de ce rotor par les deux parties du champ magnétique produit par cet aimant et passant chacune dans l'une des bobines fait un angle compris entre 20° et 70° environ avec un axe de symétrie des directions des champs magnétiques produits dans l'aimant permanent par les bobines lorsqu'elles sont parcourues par un courant.

L'invention va être décrite maintenant en détail à l'aide du dessin annexé dans lequel :

— la figure 1 est une vue schématique en plan d'une forme d'exécution du moteur selon l'invention ;

— la figure 2 est un tableau illustrant le procédé selon l'invention dans un cas où ce procédé est utilisé pour commander le moteur de la figure 1 ;

— la figure 3 est un schéma d'un exemple de circuit de commande du moteur de la figure 1 mettant en oeuvre le procédé selon l'invention ; et

— la figure 4 est un schéma partiel d'un autre exemple de circuit de commande du moteur de la figure 1 mettant également en oeuvre le procédé selon l'invention.

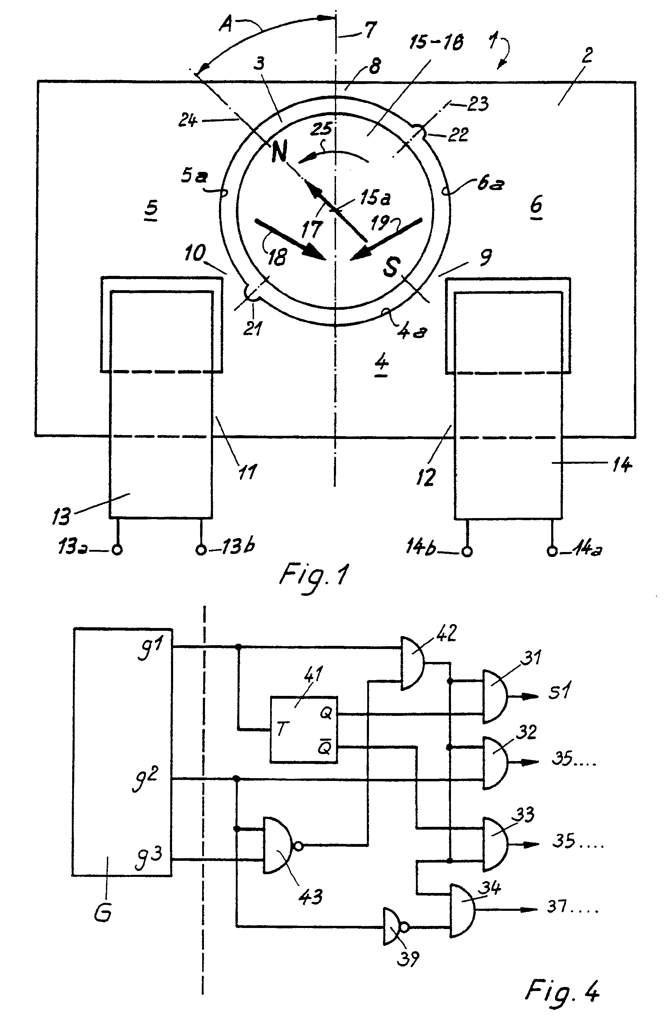

Comme l'un des moteurs décrits dans le brevet US-A-4371821 déjà mentionné, le moteur 1 représenté schématiquement en plan à la figure 1 à titre d'exemple non limitatif comporte un stator 2 percé d'une ouverture sensiblement cylindrique 3.

L'ouverture cylindrique 3 est délimitée par trois faces polaires 4a, 5a et 6a qui s'étendent chacune sur 120° environ et qui sont respectivement situées à une première extrémité de trois pièces polaires 4, 5 et 6.

Les deux faces polaires 5a et 6a sont symétriques l'une de l'autre par rapport à un axe 7 qui est le diamètre de l'ouverture 3 passant par le milieu de la face polaire 4a. Cette dernière est donc elle-même symétrique par rapport à cet axe 7.

Les pièces polaires 4, 5 et 6 sont reliées deux à deux par des parties 8, 9 et 10 situées entre les faces polaires 4a, 5a et 6a et dont les dimensions sont choisies de manière que leur réluctance soit nettement plus élevée que celle des autres parties du stator 2.

Le stator 2 comporte en outre deux noyaux 11 et 12 qui relient la deuxième extrémité de la pièce polaire 4 à la deuxième extrémité de la pièce polaire 5 et, respectivement, à la deuxième extrémité de la pièce polaire 6.

Les deux bobines du moteur 1, désignées respectivement par les références 13 et 14, sont enroulées sur les noyaux 11 et 12. Les bornes de la bobine 13, désignées par 13a et 13b, et les bornes de la bobine 14, désignées par 14a et 14b, sont destinées à être reliées à un circuit de commande non représenté dans cette figure 1 et dont un exemple sera décrit plus loin.

Le moteur 1 comporte en outre un rotor 15 dont l'axe de rotation 15a est confondu avec l'axe de l'ouverture 3. Le rotor 15 comporte un aimant permanent 16 qui est seul représenté à la figure 1 pour ne pas charger inutilement le dessin.

Dans cet exemple, l'aimant 16 ne comporte que deux pôles magnétiques désignés par N et S.

Les bobines 13 et 14 sont évidemment couplées magnétiquement avec cet aimant 16. Chacune d'entre elles est donc traversée par une partie du champ magnétique produit par cet aimant 16.

Ces champs magnétiques partiels suivent chacun un chemin fermé traversant notamment l'ouverture 3 et l'aimant 16 lui-même. Ces chemins n'ont pas été représentés pour ne pas charger inutilement la figure 1.

Le champ qui résulte, dans cet aimant 16, de l'addition vectorielle de ces deux champs magnétiques partiels a été symbolisé à la figure 1 par une flèche 17, et sera désigné par la même référence dans la suite de cette description.

Ce champ résultant 17 est perpendiculaire à l'axe de rotation 15a du rotor 15, et il est dirigé du pôle sud S vers le pôle nord N de l'aimant 16, comme l'axe d'aimantation de ce dernier. En outre, lorsque le rotor 15 tourne autour de l'axe 15a, ce champ résultant 17 tourne également autour de cet axe 15a, dans le même sens et à la même vitesse que le rotor 15.

Lorsque la bobine 13 est alimentée par un courant qui sera désigné par I13 dans la suite de cette description, elle crée un deuxième champ magnétique qui traverse l'ouverture 3 et l'aimant 16 perpendiculairement à l'axe de rotation 15a du rotor 15 et dont la résultante dans l'aimant 16 est symbolisée par la flèche 18. Pour simplifier la description qui va suivre, cette résultante sera désignée comme étant le champ magnétique 18.

Le sens de la flèche 18 dans la figure 1 indique le sens du champ 18 lorsque le courant I13 circule dans la bobine 13 de sa borne 13a à sa borne 13b. Le sens de ce champ 18 et le sens de ce courant I13 seront désignés arbitrairement comme positifs dans la suite de cette description.

De même, lorsque la bobine 14 est alimentée par un courant qui sera désigné par I14, elle crée un troisième champ magnétique qui traverse également l'ouverture 3 et l'aimant 16 perpendiculairement à l'axe de rotation 15a et dont la résultante dans cet aimant 16 est symbolisée par la flèche 19 et sera désignée comme étant le champ magnétique 19.

Le sens de la flèche 19 dans la figure 1 indique le sens du champ 19 lorsque le courant I14 circule dans la bobine 14 de sa borne 14a à sa borne 14b. Le sens de ce champ 19 et le sens de ce courant I14 seront également désignés, arbitrairement, comme positifs.

Il faut noter que lorsqu'il sera question dans la suite de cette description d'angles formés par les champs magnétiques 18 et 19 entre eux ou avec le champ résultant 17, il s'agira, de la manière qui est usuelle en géométrie, des angles que formeraient les flèches symbolisant ces champ 17, 18 ou 19 si ces flèches étaient déplacées parallèlement à elles-mêmes jusqu'à ce que leurs origines coïncident. On voit que, dans l'exemple de la figure 1, les champs 18 et 19 forment entre eux, selon cette définition, un angle de 120° environ.

Le moteur 1 comporte en outre des encoches 21 et 22 ménagées dans la paroi de l'ouverture cylindrique 3. Ces encoches 21 et 22 sont diamétralement opposées, et le diamètre 23 sur lequel elles sont situées fait un angle de 45° environ avec l'axe de symétrie 7.

La présence de ces encoches 21 et 22 provoque l'application au rotor 15 d'un couple de positionnement qui tend à le maintenir ou à le ramener dans l'une ou l'autre de deux positions d'équilibre stable, ou positions de repos, qui sont celles où la direction du champ résultant 17 est perpendiculaire au diamètre 23 et fait donc avec l'axe de symétrie 7 un angle de 45° environ, désigné par la référence A dans la figure 1. Cette direction du champ résultant 17 sera appelée direction de repos. Elle est représentée à la figure 1 par la droite en traits mixtes 24.

Dans la figure 1, le rotor 15 occupe l'une de ces positions de repos, qui sera appelée arbitrairement première position de repos de ce rotor 15. La deuxième position de repos de ce rotor 15 sera évidemment celle où le sens du champ résultant 17 est opposé à celui qu'il a dans la figure 1.

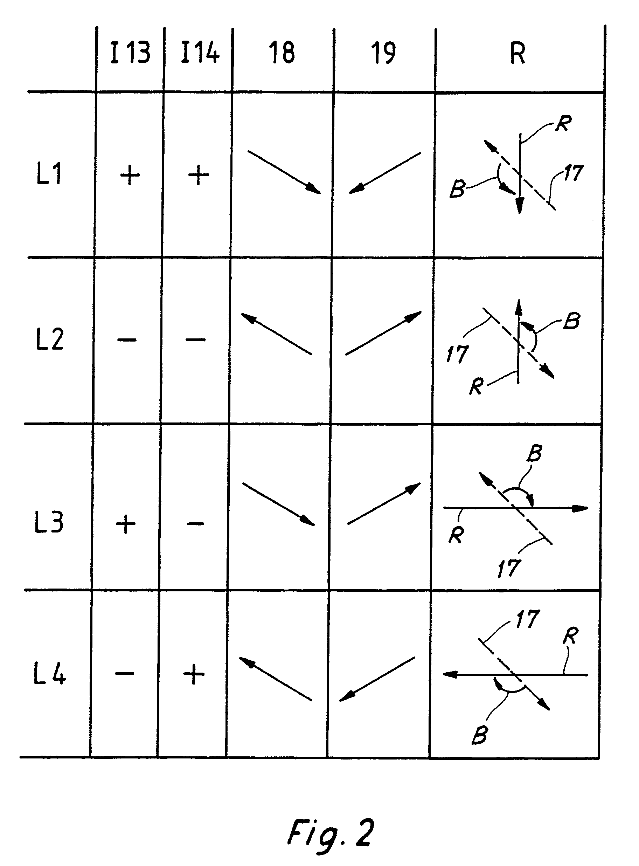

Le tableau de la figure 2 illustre le procédé de commande selon l'invention du moteur 1 de la figure 1.

Chacune des lignes L1, L2, L3, L4 de ce tableau correspond à une impulsion motrice appliquée au moteur 1.

Le signe + ou le signe − inscrit dans les colonnes désignées par I13 et I14 indique que le courant I13, respectivement le courant I14, est positif ou négatif pendant l'impulsion motrice correspondant à la ligne où il se trouve. On admettra dans cet exemple que ces courants I13 et I14 sont égaux, en valeur absolue tout au moins.

Les flèches dessinées dans les colonnes désignées par 18 et 19 indiquent la direction et le sens du champ 18, respectivement 19, créé dans l'aimant 16 par ces courants I13, respectivement I14. On admettra également que, dans cet exemple, les bobines 13 et 14 sont identiques, et que les réluctances des circuits magnétiques traversés par les champs qu'elles créent sont égales. Les intensités des champs 18 et 19 sont donc égales.

Les flèches en traits interrompus dessinées dans la colonne R indiquent la direction et le sens que le champ résultant 17 a normalement au début de l'impulsion motrice correspondant à la ligne où elles se trouvent.

Dans chaque ligne L1, L2, L3 et L4, la flèche en trait plein également dessinée dans la colonne R symbolise la direction et le sens d'un champ magnétique R qui résulte de l'addition vectorielle des champs 18 et 19 créés en réponse aux courants I13 et I14 indiqués dans la même ligne.

Il faut noter que les flèches dessinées dans les colonnes 18, 19 et R ont la même direction et le même sens que si elles étaient dessinées dans la figure 1.

Il faut rappeler que, dans la forme d'exécution du moteur 1 représentée à la figure 1, la face polaire 4a est symétrique par rapport à l'axe de symétrie 7 et les faces polaires 5a et 6a sont symétriques l'une de l'autre par rapport à ce même axe 7.

Les intensités des champs magnétiques 18 et 19 étant en outre égales dans cet exemple, le champ résultant R prend une première direction parallèle à l'axe de symétrie 7, ou même confondue avec cet axe 7, lorsque les courants I13 et I14 ont le même sens, ou une deuxième direction, perpendiculaire à la première et donc à l'axe de symétrie 7, lorsque les courants I13 et I14 ont des sens opposés.

La ligne L1 du tableau de la figure 2 illustre l'impulsion motrice qui est appliquée au moteur 1 pour faire tourner son rotor 15 d'un pas dans le sens indiqué par la flèche 25 de la figure 1 à partir de sa première position de repos. Ce sens de rotation indiqué par la flèche 25 sera appelé arbitrairement sens de rotation positif.

Pendant cette impulsion motrice, les deux bobines 13 et 14 sont alimentées simultanément de manière que les courants I13 et I14 qui les traversent soient tous deux positifs. Les champs magnétiques 18 et 19 produits par ces bobines 13 et 14 en réponse à ces courants ont donc la direction et le sens indiqués dans cette ligne L1, qui sont d'ailleurs identiques à ceux qui sont indiqués dans la figure 1.

Dans les conditions mentionnées ci-dessus, le champ magnétique R résultant de l'addition vectorielle des champ 18 et 19 a donc sa première direction, c'est-à-dire celle qui est parallèle à l'axe de symétrie 7, et un sens allant vers la face polaire 4a.

On voit facilement que, puisque la direction de repos 24 forme avec l'axe de symétrie 7 un angle de 45°, le champ résultant R mentionné ci-dessus forme, au début de l'impulsion motrice, un angle de 135° avec le champ résultant 17. Cet angle est désigné par B dans le tableau de la figure 2. Son sens, mesuré depuis le champ résultant 17 vers le champ résultant R, est le même que celui de la flèche 25 de la figure 1 et sera également désigné arbitrairement comme sens positif.

L'interaction des champs R et 17 produit un couple moteur qui provoque la rotation du rotor 15 dans le sens positif, à condition bien entendu que les courant I13 et I14 aient une intensité suffisante. Pendant cette rotation du rotor 15, ce couple moteur commence par augmenter et passe par un maximum lorsque le rotor 15 se trouve dans la position où le champ résultant 17 est perpendiculaire au champ résultant R, c'est-à-dire lorsqu'il a tourné de 45° environ.

Ce couple moteur diminue ensuite et, si l'impulsion motrice n'est pas interrompue, il atteint une valeur nulle lorsque le rotor 15 se trouve dans la position où le champ résultant 17 a la même direction et le même sens que le champ résultant R, c'est-à-dire lorsqu'il a tourné de 135° environ.

Pratiquement, l'impulsion motrice est interrompue avant que le rotor atteigne cette position, et le rotor 15 termine son pas après cette interruption de l'impulsion motrice en réponse, notamment, au couple de positionnement créé par la présence des encoches 21 et 22, à son énergie cinétique et à celle des divers éléments mécaniques qu'il entraîne.

Lorsqu'il a terminé son pas, le rotor 15 occupe donc sa deuxième position de repos.

La ligne L2 du tableau de la figure 2 illustre l'impulsion motrice qui est appliquée au moteur 1 pour faire tourner son rotor 15 d'un pas dans le sens positif à partir de sa deuxième position de repos.

Pendant cette impulsion motrice, les deux bobines 13 et 14 sont alimentées, toujours simultanément, de manière que les courants I13 et I14 qui les traversent soient tous deux négatifs.

On voit facilement que, dans ce cas, le champ résultant R a également sa première direction, mais que son sens est opposé à celui qu'il avait pendant l'impulsion motrice correspondant à la ligne L1 du tableau de la figure 2.

L'angle B formé par les champs résultants R et 17 a donc à nouveau, au début de l'impulsion motrice, une valeur de 135° et son sens, toujours depuis le champ résultant 17 vers le champ résultant R, est également positif.

Le rotor 15 est donc à nouveau soumis à un couple moteur qui provoque sa rotation dans le sens positif.

Comme dans le cas précédent, l'impulsion motrice est interrompue avant que le rotor 15 ait tourné de 135°, et ce rotor 15 termine son pas en réponse, notamment, au couple de positionnement, à son énergie cinétique ainsi qu'à celle des divers éléments qu'il entraîne.

Lorsqu'il a terminé ce pas, le rotor 15 occupe donc à nouveau sa première position de repos.

La ligne L3 du tableau de la figure 2 illustre l'impulsion motrice qui est appliquée au moteur 1 pour faire tourner le rotor 15 d'un pas dans le sens négatif à partir de sa première position de repos.

Pendant cette impulsion motrice, les deux bobines sont alimentées, toujours simultanément, de manière que le courant I13 soit positif et que le courant I14 soit négatif.

On voit facilement que, dans ces conditions, le champ résultant R a sa deuxième direction, c'est-à-dire celle qui est perpendiculaire à l'axe de symétrie 7, et que son sens va de la face polaire 5a vers la face polaire 6a.

Au début de l'impulsion motrice, le champ résultant R fait donc à nouveau un angle B de 135° environ avec le champ résultant 17. Mais cette fois, le sens de cet angle B, toujours lorsqu'il est mesuré depuis le champ résultant 17 vers le champ résultant R, est négatif.

Le rotor 15 est donc soumis à un couple moteur qui provoque sa rotation dans le sens négatif.

Comme ci-dessus, l'impulsion motrice est interrompue et le rotor 15 termine son pas en réponse, notamment, au couple de positionnement, à son énergie cinétique et à celle des divers éléments mécaniques qu'il entraîne.

Lorsqu'il a terminé ce pas, le rotor 15 occupe donc sa deuxième position de repos.

La ligne L4 du tableau de la figure 2 illustre l'impulsion motrice qui est appliquée au moteur 1 pour faire tourner le rotor 15 d'un pas dans le sens négatif à partir de cette deuxième position de repos.

Pendant cette impulsion motrice, les bobines 13 et 14 sont alimentées, toujours simultanément, de manière que le courant I13 soit négatif et que le courant I14 soit positif.

Dans ces conditions, le champ résultant R a de nouveau sa deuxième direction, comme dans le cas précédent, mais son sens va de la face polaire 6a vers la face polaire 5a.

Au début de l'impulsion motrice, le champ résultant R fait donc à nouveau un angle B de 135° avec le champ résultant 17, et le sens de cet angle B est à nouveau négatif.

Le rotor 15 est donc à nouveau soumis à un couple moteur qui provoque sa rotation dans le sens négatif.

Comme dans les cas précédents, le rotor 15 termine son pas, après que l'impulsion motrice a été interrompue, en réponse, notamment, au couple de positionnement, à son énergie cinétique et à celle des éléments mécaniques qu'il entraîne.

En résumé, on voit que pour faire tourner le rotor 15, on applique au moteur 1 des impulsions motrices pendant lesquelles les deux bobines 13 et 14 sont toujours alimentées simultanément par des tensions dont la polarité ne varie pas.

En outre, ces bobines 13 et 14 sont alimentées de manière que le champ magnétique R résultant de l'addition vectorielle des champs magnétiques 18 et 19 produits dans l'aimant 16 par les courants I13 et I14 circulant dans ces bobines 13 et 14 fait, au début de chaque impulsion motrice, un angle B de 135° environ avec le champ résultant 17, le sens de cet angle B, mesuré depuis le champ résultant 17 vers le champ résultant R, étant identique au sens dans lequel le rotor 15 doit tourner.

Du fait que l'angle B formé par le champ résultant 17 avec le champ résultant R au début de chaque impulsion motrice a une valeur de 135°, le couple fourni par le moteur 1 a une valeur qui commence par augmenter et qui passe par un maximum lorsque le rotor 15 a tourné de 45°, c'est-à-dire lorsque la direction du champ résultant 17 est perpendiculaire à la direction du champ résultant R.

Comme l'impulsion motrice est généralement interrompue, en pratique, lorsque le rotor 15 a tourné d'un angle de 50° à 70° environ, le couple produit par le moteur 1 a donc une valeur proche de sa valeur maximum pendant toute la durée de l'impulsion motrice.

En outre, comme le sens du courant dans les bobines 13 et 14 du moteur 1 ne change pas pendant toute la durée des impulsions motrices, il n'existe pas de consommation inutile et/ou de risque d'inversion du sens de rotation du rotor tels que ceux qui peuvent se produire à la fin de la première partie de ces impulsions motrices lorsque le moteur est commandé de la manière décrite dans le brevet US-A-4371821 mentionné ci-dessus.

Il en résulte que, toutes autres choses étant égales, le rendement de ce moteur 1 et sa sécurité de fonctionnement sont plus élevés que ceux du moteur décrit dans ce brevet US-A-4371821.

Le rendement du moteur 1 est également plus élevé que celui d'un moteur commandé selon le procédé décrit dans le brevet US-A-4514676 qui a aussi été mentionné ci-dessus, du fait que ses deux bobines sont alimentées simultanément.

La valeur de l'angle B mentionnée ci-dessus, c'est-à-dire 135°, est celle pour laquelle le rendement du moteur 1 est le plus élevé. Il est cependant possible de choisir pour cet angle B des valeurs comprises entre 110° et 160° environ sans que son rendement diminue de manière trop forte. Notamment, une valeur de cet angle B supérieure à 135° permet d'obtenir du moteur 1 un couple moteur plus élevé, au prix d'une légère augmentation de sa consommation.

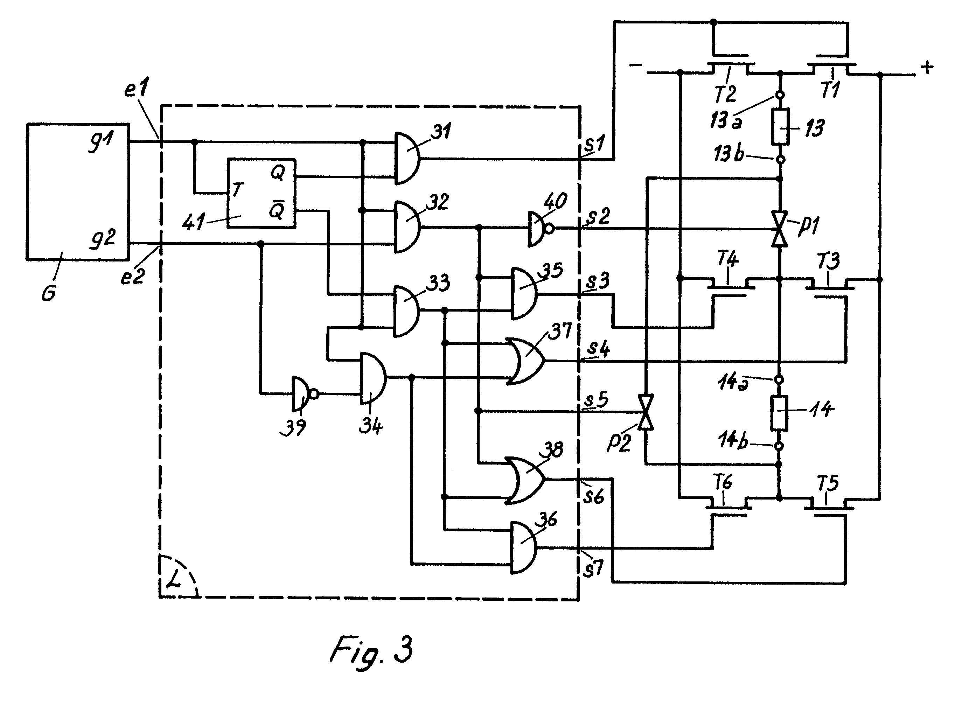

La figure 3 représente à titre d'exemple non limitatif le schéma d'un circuit permettant de commander le moteur 1 de la figure 1 de la manière décrite ci-dessus à l'aide du tableau de la figure 2.

Dans ce schéma, seules les bobines 13 et 14 du moteur 1, avec leurs bornes 13a et 13b, respectivement 14a et 14b, ont été représentées.

Le circuit de commande de la figure 3 comporte six transistors MOS désignées par T1 à T6.

Les transistors T1, T3 et T5 sont de type p, et leur source est reliée au pôle positif + d'une source d'alimentation non représentée.

Les transistors T2, T4 et T6 sont de type n, et leur source est reliée au pôle négatif − de la même source d'alimentation.

On admettra que les états logiques "0" et "1" des signaux qui seront mentionnés ci-dessous correspondent respectivement au potentiel de la borne négative − et au potentiel de la borne positive + de la source d'alimentation mentionnée ci-dessus, qui alimente également les divers composants électroniques qui vont être décrits.

Par conséquent, les transistors T1, T3 et T5 sont conducteurs ou bloqués selon que le signal appliqué sur leur électrode de commande a l'état logique "0", ou "1", et le contraire est valable pour les transistors T2, T4 et T6.

Les drains des transistors T1 et T2 sont reliés, ensemble, à la borne 13a de la bobine 13.

Les drains des transistors T3 et T4 sont reliés, ensemble, à la borne 14a de la bobine 14 et à l'une des borne d'une porte de transmission P1 dont l'autre borne est reliée à la borne 13b de la bobine 13.

Les drains des transistors T5 et T6 sont reliés, ensemble, à la borne 14b de la bobine 14 et à une borne d'une porte de transmission P2 dont l'autre borne est reliée à la borne 13b de la bobine 13.

Il faut noter que les portes de transmission P1 et P2 sont bloquées ou conductrices selon que le signal appliqué à leur électrode de commande est à l'état "0" ou "1".

Les électrodes de commande des transistors T1 à T6 et des portes P1 et P2 sont reliées de la manière représentée aux sorties s1 à s7 d'un circuit logique L comportant des portes ET 31 à 36, des portes OU 37 et 38, des inverseurs 39 et 40, et une bascule 41 de type T.

On admettra que les sorties Q et $\overline{Q}$ de cette bascule 41 changent d'état chaque fois que le signal appliqué à l'entrée T passe de l'état "1" à l'état "0".

Les liaisons des divers composants du circuit L entre eux et avec les sorties s1 à s7 ne seront pas décrites en détail ici, car la conception de ce circuit L, ou d'un circuit remplissant les mêmes fonctions, se déduit aisément de son fonctionnement qui va être décrit plus loin.

Le circuit de la figure 3 comporte encore un circuit générateur de signaux de commande G dont les sorties g1 et g2 sont reliées aux entrées e1 et e2 du circuit logique L.

Ce circuit G est agencé de manière que le signal qu'il produit à sa sortie g1, qui sera appelé signal g1, passe de l'état logique "0" à l'état logique "1" chaque fois que le moteur 1 doit recevoir une impulsion motrice, que ce signal g1 reste dans cet état "1" pendant une durée égale à la durée que doit avoir cette impulsion motrice pour que le rotor 15 du moteur 1 tourne correctement d'un pas, et que ce signal g1 retourne ensuite à l'état "0".

Ce circuit G est en outre agencé de manière que le signal qu'il produit à sa sortie g2, qui sera appelé signal g2, soit en permanence à l'état logique "0" ou à l'état logique "1" selon que le rotor 15 doit tourner dans le sens positif ou dans le sens négatif.

Le circuit G ne sera pas non plus décrit en détail ici, car sa constitution dépend du genre de dispositif qui est équipé du moteur 1 et sa conception est à la portée de l'homme du métier.

On voit facilement que, dans le cas du circuit de la figure 3, les électrodes de commande de tous les transistors T1 à T6 et de la porte P2 sont à l'état logique "0" et que l'électrode de commande de la porte P1 est à l'état logique "1" tant que le signal g1 est à l'état "0", indépendamment de l'état du signal g2.

Dans cette situation les transistors T1, T3 et T5 ainsi que la porte P1 sont conducteurs, alors que les transistors T2, T4 et T6 ainsi que la porte P2 sont bloqués. Les bobines 13 et 14 sont donc court-circuitées et aucun courant ne circule dans ces bobines.

Lorsqu'une impulsion motrice doit être appliquée au moteur 1, le signal g1 passe à l'état "1" et y reste pendant toute la durée que doit avoir cette impulsion motrice.

Si le signal g2 et la sortie Q de la bascule 41 sont à l'état "0" lorsque le signal g1 passe à l'état "1", les transistors T3 et T5 se bloquent et le transistor T6 devient conducteur, les autres transistors et les portes P1 et P2 restant dans l'état où ils étaient précédemment.

Un courant circule donc de la borne + à la borne − de la source d'alimentation à travers le transistor T1, la bobine 13, la porte P1, la bobine 14 et le transistor T6. Dans les bobines 13 et 14, ce courant circule de la borne 13a vers la borne 13b, respectivement de la borne 14a à la borne 14b.

Dans les deux bobines 13 et 14, le courant a donc le sens qui a été désigné ci-dessus comme positif, et l'impulsion motrice que reçoit alors le moteur 1 correspond à celle qui a été décrite à l'aide de la ligne L1 du tableau de la figure 2.

A la fin de cette impulsion motrice, c'est-à-dire lorsque le signal g1 repasse à l'état "0", les transistors T3 et T5 deviennent à nouveau conducteurs et le transistors T6 se bloque à nouveau. En outre, la sortie Q de la bascule 41 passe à l'état "1".

Si le signal g2 est toujours à l'état "0" au début de l'impulsion motrice suivante, c'est-à-dire lorsque le signal g1 repasse à l'état "1", ce sont les transistors T1 et, à nouveau, T3 qui se bloquent et le transistor T2 qui devient conducteur, les autres transistors et les portes P1 et P2 restant dans l'état qu'ils ont lorsque le signal g1 est à l'état "0".

Dans ces conditions, un courant circule donc de la borne + à la borne − de la source d'alimentation à travers le transistor T5, la bobine 14, la porte P1, la bobine 13 et le transistor T2. Dans les bobines 13 et 14, ce courant circule de la borne 13b vers la borne 13a, respectivement de la borne 14b vers la borne 14a.

Dans ces deux bobines, le courant a donc le sens défini comme négatif, et l'impulsion motrice correspond à celle qui a été décrite à l'aide de la ligne L2 du tableau de la figure 2.

A la fin de cette impulsion motrice, les transistors T1 et T3 deviennent à nouveau conducteurs, et le transistor T2 se bloque à nouveau. En outre, la sortie Q de la bascule 41 repasse à l'état "0", de sorte que, si le signal g2 reste à l'état "0", la prochaine impulsion motrice correspond à nouveau à la ligne L1 du tableau de la figure 2.

Si, par contre, le signal g2 est à l'état "1" et la sortie Q de la bascule 41 est à l'état "0" au moment où le signal g1 passe à l'état "1", les transistors T3 et T5, ainsi que la porte P1, se bloquent alors que le transistor T4 et la porte P2 deviennent conducteurs.

Un courant circule donc de la borne + à la borne − de la source d'alimentation à travers le transistor T1, la bobine 13, la porte P2, la bobine 14 et le transistor T4. Ce courant a donc le sens positif dans la bobine 13 et le sens négatif dans la bobine 14, et l'impulsion motrice correspond à celle qui a été décrite à l'aide de la ligne L3 du tableau de la figure 2.

A la fin de cette impulsion motrice, le transistor T4 et la porte P2 se bloquent à nouveau et le transistor T4 et la porte P1 deviennent à nouveau conducteurs. En outre, la sortie Q de la bascule 41 passe à l'état "1".

Si le signal g2 est toujours à l'état "1" lorsque le signal g1 repasse à l'état "1" au début de l'impulsion motrice suivante, ce sont les transistors T1, à nouveau, et T5, ainsi que, à nouveau, la porte P1 qui se bloquent, alors que le transistor T2 et, à nouveau, la porte P2 deviennent conducteurs.

Un courant circule donc de la borne + à la borne – de la source d'alimentation à travers le transistor T3, la bobine 14, la porte P2, la bobine 13 et le transistor T2. Ce courant a donc le sens positif dans la bobine 14 et le sens négatif dans la bobine 13, et l'impulsion motrice correspond à celle qui a été décrite à l'aide de la ligne L4 du tableau de la figure 2.

A la fin de cette impulsion motrice, les transistors T1 et T5 ainsi que la porte P1 deviennent à nouveau conducteurs, alors que le transistor T2 et la porte P2 se bloquent à nouveau. En outre, la sortie Q de la bascule 41 repasse à l'état "0", de sorte que, si le signal g2 reste à l'état "1", la prochaine impulsion motrice correspond à nouveau à la ligne L3 du tableau de la figure 2.

Dans l'exemple qui vient d'être décrit, le moteur 1 est commandé de la manière dite "à tension constante", puisque ses bobines 13 et 14, en série l'une avec l'autre dans ce cas particulier, sont soumises à la tension de la source d'alimentation du circuit de commande pendant toute la durée de chaque impulsion motrice.

Il est évident que le moteur 1 peut tout aussi bien être commandé de la manière dite "à courant constant", c'est-à-dire de manière que le courant qui circule dans les bobines 13 et 14 soit au moins à peu près constant pendant toute la durée de chaque impulsion motrice.

Un tel circuit est décrit, par exemple, dans la demande de brevet EP-A-0057663, dans un cas où il est utilisé pour commander un moteur pas à pas à une seule bobine et un seul sens de rotation. L'adaptation de ce circuit au cas du moteur 1 à deux bobines 13 et 14 et à deux sens de rotation ne sera pas décrite ici car elle est à la portée de l'homme du métier.

Il est en outre évident que le circuit de commande du moteur 1, de quelque nature qu'il soit, peut être associé avec un circuit permettant l'ajustement de la durée des impulsions motrices à la charge mécanique entraînée par ce moteur. De nombreux documents, qui ne peuvent pas être énumérés ici, décrivent de tels circuits d'ajustement, qui sont donc bien connus et ne seront pas non plus décrits ici.

Lorsque les bobines 13 et 14 sont commandées par un circuit tel que celui de la figure 3, elles sont toujours branchées en série l'une avec l'autre pendant les impulsions motrices.

Il est évident que ce branchement n'est pas le seul possible et que ces bobines 13 et 14 peuvent également être branchées en parallèle pendant chaque impulsion motrice, ou même en série lorsque le rotor doit tourner dans un sens et en parallèle lorsque ce rotor doit tourner dans l'autre sens.

Des circuits de commande réalisant ces branchements n'ont pas été représentés car leur conception est à la portée de l'homme du métier.

Il faut encore relever que dans la forme d'exécution du moteur 1 représentée à la figure 1, les champs 18 et 19 forment un angle de 120° environ lorsqu'ils sont tous deux positifs ou tous deux négatifs, alors qu'ils forment un angle de 60° environ lorsqu'ils sont l'un positif et l'autre négatif.

Si en outre, comme cela a été admis pour la description du fonctionnement du moteur 1 faite à l'aide de la figure 2, les champs magnétiques 18 et 19 ont toujours la même intensité, qui sera désignée par J, on voit que l'intensité du champ R résultant de leur addition vectorielle n'est pas la même selon qu'ils sont tous deux positifs ou négatifs, ou qu'ils sont l'un positif et l'autre négatif.

Dans le premier cas, qui est celui où le rotor 15 tourne dans le sens positif, l'intensité du champ résultant R est égale à J, alors que dans le deuxième cas, qui est celui où le rotor 15 tourne dans le sens négatif, elle est égale à $\sqrt{3} \cdot J$.

Le couple produit par le moteur 1, qui est proportionnel à l'intensité du champ résultant R, est donc également $\sqrt{3}$ fois plus élevé lorsque le rotor 15 tourne dans le sens négatif que lorsque ce rotor 15 tourne dans le sens positif.

Si cela est nécessaire, diverses mesures peuvent être prises pour supprimer ou au moins diminuer cette variation du couple fourni par le moteur 1 en fonction du sens de rotation de son rotor 15.

Ainsi, par exemple, il est possible de modifier le circuit de commande de la figure 3 de la manière représentée à la figure 4.

Les portes 31 et 34, l'inverseur 39 et la bascule 41 visibles dans cette figure 4 sont identiques aux éléments de la figure 3 qui portent les mêmes références. En outre, les sorties des portes 31 à 34 sont reliées de la même manière et aux mêmes éléments que dans la figure 3. Ces derniers n'ont pas été représentés dans la figure 4.

Outre des sorties g1 et g2 qui délivrent les mêmes signaux que les sorties g1 et g2 du circuit G de la figure 3, le circuit G de la figure 4 comporte une sortie g3 qui délivre un signal formé d'une suite d'impulsions périodiques qui seront appelées impulsions g3. Pour une raison qui sera rendue évidente par la suite de cette description, la période de ces impulsions g3 est courte par rapport à la durée des impulsions motrices.

Le circuit de la figure 4 comporte en outre une porte ET 42 dont la sortie est reliée aux entrées des portes 31 et 34 qui sont reliées, dans la figure 3, à la sortie g1 du circuit G. Les entrées de cette porte 42 sont respectivement reliées à cette sortie g1 du circuit G et à la sortie d'une porte NON-ET 43.

Les entrées de cette porte 43 sont respectivement reliées à la sortie g2 et à la sortie g3 du circuit G.

On voit facilement que, lorsque le signal g2 est à l'état "0", c'est-à-dire lorsque le rotor 15 doit tourner dans le sens positif, le circuit de la figure 4 fonctionne exactement comme celui de la figure 3.

Par contre, lorsque le signal g2 est à l'état "1", c'est-à-dire lorsque le rotor 15 doit tourner dans le sens négatif, les bobines 13 et 14 sont périodiquement déconnectées de la source d'alimentation et remises en court-circuit, et ceci chaque fois que le signal g3 est à l'état "1". Le courant circulant dans ces bobines 13 et 14 n'est pas interrompu lorsque ce signal g3 est dans cet état "1", puisque ces bobines 13 et 14 ont une certaine inductivité et qu'elles sont mises en court-circuit. Mais, évidemment, la valeur de ce courant est, à chaque instant, inférieure à celle qu'il aurait si les bobines 13 et 14 restaient en permanence connectées à la source d'alimentation.

Il suffit donc de choisir le rapport cyclique des impulsions g3 de manière que la valeur de ce courant diminue d'un facteur $\sqrt{3}$. Le couple produit par le moteur 1 est alors identique quel que soit le sens de rotation du rotor 15.

Dans le moteur 1 représenté à la figure 1, l'aimant 16 du rotor 15 n'a que deux pôles magnétiques, et les moyens de positionnement de ce rotor 15, constitués par les encoches 22 et 23, sont agencés de manière que la direction de repos du champ résultant 17 fasse un angle A de 45° avec l'axe de symétrie 7.

Cette valeur de l'angle A est particulièrement avantageuse, car c'est celle pour laquelle le rendement du moteur 1 est le plus élevé lorsqu'il est commandé de la manière particulièrement simple décrite ci-dessus, c'est-à-dire lorsque les courants I13 et I14 sont égaux.

Il est cependant possible de disposer les moyens de positionnement du rotor 15 de manière que la valeur de cet angle A soit comprise entre 20° environ et 70° environ sans modifier cette manière de commander le moteur 1, et sans pour autant que le rendement de ce dernier diminue trop fortement.

Il est également possible de disposer les moyens de positionnement du rotor 15 de manière que l'angle A ait une valeur quelconque, comprise ou non entre 20° et 70°, et de commander le moteur 1 de manière que son fonctionnement soit malgré tout semblable à celui qui a été décrit ci-dessus.

Dans un tel cas, il faut toutefois en général que les courants I13 et I14 soient différents l'un de l'autre et, en outre, différents selon que le rotor 15 doit tourner dans un sens ou dans l'autre.

Cette exigence provient du fait que les directions des champs magnétiques 18 et 19 sont fixes, pour un moteur donné. On voit facilement que si l'on désire que le champ résultant R forme avec le champ résultant 17 un angle B ayant une valeur déterminée, par exemple 135° environ, au début de chaque impulsion motrice, il faut que les intensités de ces champs magnétiques 18 et 19, et donc celles des courants I13 et I14, soient différentes l'une de l'autre.

On voit également que, selon la valeur de l'angle A, il est possible que, avec les conventions de sens définies ci-dessus, les champs 18 et 19, et donc les courants I13 et I14, doivent avoir des sens différents l'un de l'autre pendant les impulsions motrices destinées à faire tourner le rotor 15 dans le sens positif, et que ces courants I13 et I14 doivent avoir le même sens pendant les impulsions motrices destinées à faire tourner le rotor 15 dans le sens négatif.

Pour décrire le procédé de commande du moteur 1 dans un tel cas, il est donc plus avantageux de définir respectivement comme premier et deuxième sens du courant I13 ou du courant I14 le sens que ce courant I13 ou I14 a pendant les impulsions motrices destinées à faire tourner le rotor 15 dans son premier sens de rotation à partir de sa première et, respectivement, de sa deuxième position de repos.

Avec ces définitions, et quel que soit l'angle A, on peut dire que, pour que le rotor 15 tourne dans son premier sens, les courants I13 et I14 doivent avoir tous deux alternativement leur premier et leur deuxième sens et que, pour que le rotor 15 tourne dans son deuxième sens, le courant I13 doit avoir alternativement son premier et son deuxième sens et le courant I14 doit avoir son deuxième sens lorsque le courant I13 a son premier sens et réciproquement.

Connaissant l'angle A, il est facile de déterminer les intensités et les sens que les courants I13 et I14 doivent avoir pendant chacune des impulsions motrices pour que l'angle B ait la valeur désirée. Cette détermination peut être faite à l'aide de calculs trigonométriques simples qui ne seront pas décrits ici.

Des exemples de moteurs dans lesquels la valeur de l'angle A est différente de 45° ne seront pas non plus décrits car leur réalisation et celle de leur circuit de commande se déduisent aisément des explications ci-dessus.

Dans l'exemple qui vient d'être décrit, le procédé selon l'invention est appliqué à la commande d'un moteur ayant trois faces polaires entourant un aimant permanent à deux pôles magnétiques, comme le moteur décrit par le brevet US-A-4371821.

Il est évident pour l'homme du métier que ce procédé peut tout aussi bien être appliqué à la commande de n'importe quel autre moteur répondant à la définition donnée dans l'introduction de la présente description et dont le rotor comporte un aimant permanent bipolaire, comme, par exemple, le moteur qui est décrit par le brevet US-A-4546278 déjà mentionné.

En outre, on voit facilement que, quel que soit le nombre P de pôles magnétiques de l'aimant du rotor, qui a alors P positions de repos distinctes, il existe toujours, dans l'aimant permanent, un champ magnétique semblable au champ résultant 17 décrit dans le cas du moteur 1 de la figure 1, c'est-à-dire un champ résultant de l'addition vectorielle des deux champs partiels produits par l'aimant et passant chacun à travers une des bobines.

Toujours quel que soit le nombre P de pôles magnétiques de l'aimant du rotor, ce champ résultant a une direction et un sens qui dépendent de la position angulaire du rotor, et il tourne de 180° dans le même sens que le rotor chaque fois que ce dernier tourne d'un angle égal à celui qui sépare, dans l'aimant permanent, deux pôles magnétiques adjacents, soit 360°/P, ou, ce qui est équivalent, d'un angle égal à celui qui sépare deux positions de repos successives du rotor.

Comme dans le cas d'un moteur dont le rotor comporte un aimant bipolaire, qui n'est qu'un cas particulier d'un aimant dans lequel le nombre P mentionné ci-dessus est égal à deux, c'est l'interaction de ce champ résultant avec celui qui est produit par les bobines en réponse aux courants qui les traversent qui produit le couple moteur provoquant la rotation du rotor.

Le procédé selon l'invention, qui a été décrit ci-dessus dans un cas où il est utilisé à la commande d'un moteur dont le rotor comporte un aimant bipolaire s'applique donc, sans changement, à la commande de n'importe quel moteur répondant à la définition donnée dans l'introduction de la présente demande, même si le rotor de ce moteur comporte un aimant ayant plus de deux pôles magnétiques.

Ce procédé ne sera donc pas décrit à nouveau dans le cas où il est utilisé à la commande d'un tel moteur.

Il est également évident qu'un tel moteur dont le rotor comporte un aimant permanent ayant plus de deux pôles magnétiques est aussi particulièrement bien adapté à être commandé par le procédé décrit ci-dessus lorsque les moyens de positionnement de son rotor sont agencés de manière que le champ résultant semblable au champ 17 défini ci-dessus fait, dans chacune des positions de repos de ce rotor, un angle égal, de préférence, à 45° environ avec l'axe de symétrie des directions des champs magnétiques produits, dans l'aimant permanent, par les bobines du moteur lorsque celles-ci sont parcourues par un courant. Cet angle, qui est semblable à l'angle A de la figure 1, peut d'ailleurs être compris entre 20° et 70° sans que le fonctionnement de ce moteur en soit notablement affecté.

Un tel moteur n'a pas été représenté, car il peut être identique au moteur 1 de la figure 1 dans lequel l'aimant bipolaire 16 a été simplement remplacé par un aimant ayant plus de deux pôles magnétiques.

**Revendications**

1. Procédé de commande d'un moteur pas à pas à deux sens de rotation comportant :
   — un rotor comprenant un aimant permanent produisant un premier champ magnétique ;
   — une première bobine traversée par une première partie dudit premier champ magnétique et destinée à produire un deuxième champ magnétique en réponse à un premier courant ;
   — une deuxième bobine traversée par une deuxième partie dudit premier champ magnétique et destinée à produire un troisième champ magnétique en réponse à un deuxième courant, lesdites première et deuxième parties du premier champ magnétique formant dans ledit aimant permanent un premier champ résultant ; et
   — des moyens de positionnement destinés à maintenir ou à ramener ledit rotor dans l'une ou l'autre d'une pluralité de positions de repos ;
   ledit procédé comportant la production desdits courants et leur application simultanée auxdites bobines chaque fois que ledit rotor doit tourner d'un pas ; et
   ledit procédé étant caractérisé par le fait que lesdits courants sont produits avec le même sens pendant toute la durée de leur application auxdites bobines et avec des intensités telles que, au début de ladite application et lorsque ledit rotor occupe l'une desdites positions de repos, ledit premier champ résultant forme un angle ayant une valeur comprise entre 110° environ et 160° environ avec un deuxième champ résultant formé dans ledit aimant permanent par lesdits deuxième et troisième champs magnétiques lesdits sens desdits courants étant en outre tels que ledit angle a un sens, lorsqu'il est mesuré depuis ledit premier champ résultant vers ledit deuxième champ résultant, qui est le sens dans lequel ledit rotor doit tourner.

2. Procédé selon la revendication 1, caractérisé par le fait que ledit angle est sensiblement égal à 135°.

3. Procédé selon la revendication 1, caractérisé par le fait que, lesdits moyens de positionnement étant agencés de manière que dans chacune desdites positions de repos du rotor ledit premier champ résultant fait avec un axe de référence qui est l'un des axes de symétrie des directions desdits deuxième et troisième champs magnétiques dans ledit aimant permanent un angle sensiblement égal à 45°, lesdits premier et deuxième courants sont produits avec des intensités sensiblement égales.

4. Procédé selon l'une des revendications 1 à 3, caractérisé par le fait que, pour faire tourner ledit rotor d'une pluralité de pas successifs dans un premier sens de rotation, lesdits premier et deuxième courants sont produits alternativement tous deux avec un premier sens et tous deux avec leur deuxième sens, et que, pour faire tourner ledit rotor d'une pluralité de pas successifs dans son deuxième sens de rotation, ledit premier courant est produit alternativement avec son premier et avec son deuxième sens et ledit deuxième courant est produit avec son deuxième sens lorsque ledit premier courant est produit avec son premier sens et avec son premier sens lorsque ledit premier courant est produit avec son deuxième sens.

5. Moteur pas à pas à deux sens de rotation comportant :

— un rotor comprenant un aimant permanent produisant un premier champ magnétique ;

— une première bobine traversée par une première partie dudit premier champ magnétique et destinée à produire un deuxième champ magnétique ;

— une deuxième bobine traversée par une deuxième partie dudit premier champ magnétique et destinée à produire un troisième champ magnétique ;

— des premiers moyens pour appliquer ledit deuxième champ magnétique audit aimant permanent dans une première direction ;

— des deuxièmes moyens pour appliquer ledit troisième champ magnétique audit aimant permanent dans une deuxième direction symétrique de ladite première direction par rapport à un axe de symétrie ; et

— des moyens de positionnement destinés à maintenir ou à ramener ledit rotor dans l'une ou l'autre d'une pluralité de positions de repos ; caractérisé par le fait que lesdits moyens de positionnement sont agencés de manière que, dans chacune desdites positions de repos, le champ magnétique résultant formé dans ledit aimant permanent par lesdites première et deuxième parties du premier champ magnétique fait avec ledit axe de symétrie un angle compris entre 20° environ et 70° environ.

6. Moteur pas à pas selon la revendication 5, caractérisé par le fait que ledit angle a une valeur sensiblement égale à 45°.

**Patentansprüche**

1. Steuerverfahren eines reversierbaren Schrittmotors, umfassend

— einen Rotor mit einem ein erstes Magnetfeld erzeugenden Permanentmagneten,

— eine erste, durch einen ersten Teil des ersten Magnetfelds durchflossene Spule, bestimmt zum Erzeugen eines zweiten Magnetfelds im Ansprechen auf einen ersten Strom,

— eine zweite, durch einen zweiten Teil des ersten Magnetfelds durchflossene Spule, bestimmt zum Erzeugen eines dritten Magnetfelds im Ansprechen auf einen zweiten Strom, welche ersten und zweiten Teile des ersten Magnetfelds in dem Permanentmagneten ein erstes resultierendes Feld bilden, und

— Positioniermittel, bestimmt zum Halten oder Rückführen des Rotors in die eine oder andere einer Mehrzahl von Ruhepositionen,

welches Verfahren die Erzeugung der Ströme und deren gleichzeitiges Anlegen an die Spulen immer dann umfaßt, wenn der Rotor um einen Schritt drehen muß, und

welches Verfahren dadurch gekennzeichnet ist, daß die Ströme mit gleicher Richtung während der Gesamtdauer ihrer Einspeisung in die Spulen und mit Intensitäten derart erzeugt werden, daß zu Beginn der Einspeisung und solange der Rotor eine der Ruhepositionen einnimmt, das erste resultierende Feld einen Winkel mit einer Größe zwischen etwa 110° und etwa 160° mit einem zweiten resultierenden Feld bildet, hervorgerufen in dem Permanentmagneten durch das zweite und dritte Magnetfeld, wobei die Richtungen der Ströme ferner derart sind, daß der Winkel eine Richtung hat, wenn er ausgehend von dem ersten resultierenden Feld in Richtung des zweiten resultierenden Feldes gemessen wird, die die Richtung ist, in der der Rotor drehen muß.

2. Verfahren nach Anspruch 1, dadurch gekennzeichnet, daß der Winkel im wesentlichen gleich 135° ist.

3. Verfahren nach Anspruch 1, dadurch gekennzeichnet, daß mit der Maßgabe, daß die Positioniermittel derart ausgebildet sind, daß in jeder Ruheposition des Rotors das erste resultierende Feld mit einer Bezugsachse, die eine der Symmetrieachsen der Richtungen des zweiten und dritten Magnetfeldes in dem Permanentmagneten ist, einen Winkel im wesentlichen gleich 45° einschließt, die ersten und zweiten Ströme mit im wesentlichen gleicher Intensität erzeugt werden.

4. Verfahren nach einem der Ansprüche 1 bis 3, dadurch gekennzeichnet, daß zum Drehenlassen des Rotors um eine Mehrzahl von aufeinanderfolgenden Schritten in einer ersten Drehrichtung der erste und der zweite Strom alternierend beide mit einer ersten Richtung und beide mit einer zweiten Richtung erzeugt werden, und daß zum Drehenlassen des Rotors um eine Mehrzahl aufeinanderfolgender Schritte in seiner zweiten Drehrichtung der erste Strom alternierend mit seiner ersten und seiner zweiten Richtung erzeugt wird und der zweite Strom mit seiner zweiten Richtung erzeugt wird, wenn der erste mit seiner ersten Richtung erzeugt wird, und mit seiner ersten Richtung, wenn der erste Strom mit seiner zweiten Richtung erzeugt wird.

5. Reversierbarer Schrittmotor, umfassend :

— einen Rotor mit einem Permanentmagneten, der ein erstes Magnetfeld erzeugt,

— eine erste, durch einen ersten Teil des ersten Magnetfeldes durchflossene Spule, bestimmt zum Erzeugen eines zweiten Magnetfeldes,

— eine zweite, durch einen zweiten Teil des ersten Magnetfeldes durchflossene Spule, bestimmt zum Erzeugen eines dritten Magnetfeldes,

— erste Mittel zum Anlegen des zweiten Magnetfeldes an den Permanentmagneten in einer ersten Richtung,

— zweite Mittel zum Anlegen des dritten Magnetfeldes an den Permanentmagneten in einer zweiten Richtung, die symmetrisch ist zur ersten bezüglich einer Symmetrieachse, und

— Positioniermittel, bestimmt zum Halten oder Rückführen des Rotors in die eine oder andere einer Mehrzahl von Ruhepositionen,

dadurch gekennzeichnet, daß die Positioniermittel derart ausgebildet sind, daß in jeder Ruheposition das resultierende Magnetfeld, gebildet in dem Permanentmagneten durch die ersten und zweiten Teile des ersten Magnetfeldes, mit der Symmetrieachse einen zwischen etwa 20° und etwa 70° liegenden Winkel einschließt.

6. Schrittmotor nach Anspruch 5, dadurch gekennzeichnet, daß der Winkel eine Größe von im wesentlichen gleich 45° aufweist.

## Claims

1. Method of controlling a stepping motor rotatable in both senses comprising :

— a rotor comprising a permanent magnet producing a first magnetic field ;

— a first coil traversed by a first part of said first magnetic field and intended to produce a second magnetic field in response to a first current ;

— a second coil traversed by a second part of said first magnetic field and intended to produce a third magnetic field in response to a second current, said first and second parts of the first magnetic field forming in said permanent magnet a first resultant field ; and

— positioning means for maintaining said rotor in or for returning said rotor to any one of a plurality of rest positions ;

said method comprising the production of said currents and their simultaneous supply to said coils each time said rotor must turn by one step ; and

said method being characterized by the fact that said currents are produced with the same sense during the entire duration of their supply to said coils and with intensities such that, at the beginning of said current supply and when the rotor occupies one of said rest positions, said first resultant field forms an angle having a value between about 110° and about 160° with a second resultant field produced in said permanent magnet by said second and third magnetic fields, said senses of said currents being furthermore such that said angle has a sense, when measured from the first resultant magnetic field towards the second resultant magnetic field, which is the sense in which said rotor should turn.

2. Method according to claim 1, characterized by the fact that said angle is substantially equal to 135°.

3. Method according to claim 1, characterized by the fact that, said positioning means being arranged in such a manner that in each of said rest positions of the rotor said first resultant field makes, with a reference axis which is one of the axes of symmetry of the directions of said second and third magnetic fields in said permanent magnet, an angle substantially equal to 45°, said first and second currents are produced with substantially equal intensities.

4. Method according to one of claims 1 to 3, characterized by the fact that, to cause said rotor to turn by a plurality of successive steps in a first sense of rotation, said first and second currents are produced alternately both with a first sense and both with their second sense and that, to cause said rotor to turn by a plurality of successive steps in its second sense of rotation, said first current is produced alternately with its first sense and with its second sense and said second current is produced with its second sense when said first current is produced with its first sense when said first current is produced with its second sense.

5. Stepping motor rotatable in both senses comprising :

— a rotor comprising a permanent magnet producing a first magnetic field ;

— a first coil traversed by a first part of said first magnetic field and intended to produce a second magnetic field ;

— a second coil traversed by a second part of said first magnetic field and intended to produce a third magnetic field ;

— first means for applying said second magnetic field to said permanent magnet in a first direction;

— second means for applying said third magnetic field to said permanent magnet in a second direction symmetrical to said first direction relative to an axis of symmetry ; and

— positioning means for maintaining said rotor in or for returning said rotor to any one of a plurality of rest positions ;

characterized by the fact that said positioning means are arranged in such a manner that, in each of said rest positions, the resultant magnetic field formed in said permanent magnet by said first and second parts of the first magnetic field makes an angle from about 20° to about 70° with said axis of symmetry.

6. Stepping motor according to claim 5, characterized by the fact that said angle is substantially equal to 45°.

**Fig. 1**

**Fig. 4**

|     | I 13 | I 14 | 18 | 19 | R |
|-----|------|------|----|----|---|
| L1  | +    | +    | | | |
| L2  | −    | −    | | | |
| L3  | +    | −    | | | |
| L4  | −    | +    | | | |

Fig. 2

Fig. 3